# EUROPÄISCHE PATENTSCHRIFT

(11) **EP 1 401 885 B1**
(45) Veröffentlichungstag und Bekanntmachung des Hinweises auf die Patenterteilung: **30.05.2007**
(21) Anmeldenummer: 02730191.0
(22) Anmeldetag: 23.04.2002
(51) Int. Cl.: C08F 6/02, C08F 8/26

(54) **VERFAHREN ZUR HERSTELLUNG VON POLYMERZUSAMMENSETZUNGEN MIT REDUZIERTEM HALOGENGEHALT, HALOGENREDUZIERTE POLYMERZUSAMMENSETZUNGEN SOWIE VERWENDUNG DIESER ZUSAMMENSETZUNG**
METHOD FOR THE PRODUCTION OF POLYMER COMPOSITIONS WITH REDUCED HALOGEN CONTENT, REDUCED-HALOGEN POLYMER COMPOSITIONS AND UTILIZATION THEREOF
PROCEDE POUR PRODUIRE DES COMPOSITIONS POLYMERES A TENEUR EN HALOGENE REDUITE, COMPOSITIONS POLYMERES A TENEUR EN HALOGENE REDUITE ET UTILISATION DE CES COMPOSITIONS

(30) Priorität: 29.05.2001 US 865519
(43) Veröffentlichungstag der Anmeldung: 31.03.2004
(73) Patentinhaber: RohMax Additives GmbH, 64293 Darmstadt (DE)
(72) Erfinder: ROOS, Sebastian, 65779 Kelkheim/Ts (DE); BOLLINGER, Joseph, Martin, North Wales, PA 19454 (US); SCHERER, Markus, 66822 Lebach (DE)
(86) Internationale Anmeldenummer: PCT/EP2002/004445
(87) Internationale Veröffentlichungsnummer: WO 2002/096958

(56) Entgegenhaltungen:
- EP-A- 1 081 165
- WO-A-99/10387
- WO-A-99/54365
- DE-A- 2 315 480

## Beschreibung

Die Erfindung betrifft ein Verfahren zur Herstellung von Polymerzusammensetzungen mit reduziertem lebenden Halogengehalt, wobei man zuvor ethylenisch ungesättigte Monomere mittels Initiatoren, die ein übertragbares Halogen aufweisen, und einem oder mehrere Katalysatoren, die mindestens ein Übergangsmetall umfassen, in Gegenwart von Liganden, die mit dem oder den metallischen Katalysatoren eine Koordinationsverbindung bilden können, polymerisiert. Die Erfindung bezieht sich auch auf polymere Zusammensetzungen mit reduziertem lebenden Halogengehalt sowie die Verwendung dieser Polymerzusammensetzungen.

Die radikalische Polymerisation ist ein wichtiges kommerzielles Verfahren zur Herstellung einer Vielfalt von Polymeren, wie beispielsweise PMMA und Polystyrol. Nachteilig ist hierbei, daß der Aufbau der Polymere, das Molekulargewicht und die Molekulargewichtsverteilung relativ schlecht gesteuert werden können.

Eine Lösung dieser Probleme liefert das sogenannte ATRP-Verfahren (=Atom Transfer Radical Polymerisation). Es wird angenommen, daß es sich hierbei um eine "lebende" radikalische Polymerisation handelt, ohne daß durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so daß die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden.

Diese Reaktionsführung wird beispielsweise von J-S. Wang, et al., J.Am.Chem.Soc., vo1.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Der oben beschriebene Mechanismus ist nicht unumstritten. So wird beispielsweise in WO 97/47661 beschrieben, daß die Polymerisation nicht durch einen radikalischen Mechanismus sondern durch Insertion erfolgt. Für die vorliegende Erfindung ist diese Differenzierung jedoch ohne belang, da bei der in WO 97/47661 offenbarten Reaktionsführung Verbindungen verwendet werden, die auch bei einer ATRP eingesetzt werden.

Die Vorteile bekannter ATRP-Polymerisationsverfahren beschränken sich jedoch hauptsächlich auf Monomere, die selbst polar sind oder die in polaren Medien eine gute Löslichkeit zeigen. Zwar ist die vereinzelte Verwendung von unpolaren aprotischen Kohlenwasserstoffen wie Benzol, Toluol, Xylol, Cyclohexan und Hexan ebenfalls literaturbekannt, die mit diesen Lösungsmitteln hergestellten Polymere weisen jedoch deutlich höhere Polydispersitäten auf. Dieser Effekt wird beispielsweise in WO 98/40415 beschrieben.

Üblicherweise enthalten die durch ATRP-Verfahren erhältlichen Polymere Halogenatome, die als lebendes Kettenende eine enge Molekulargewichtsverteilung ermöglichen. Diese üblicherweise zwingend am Kettenende enthaltenen Halogene sind jedoch mit Nachteilen verbunden. So können diese Halogenbestandteile bei Abbau der Polymere freigesetzt werden. Insbesondere bei Kontakt mit Metallen, wie diese in Pumpen, Motoren u.ä. enthalten sind, fördern freigesetzte Halogene die Korrosion, die zur Zerstörung der Pumpen, Motoren usw. führt. Des weiteren führen die Halogene zu Problemen bei der Wiederaufarbeitung der Polymere, wobei insbesondere eine Verbrennung zu hochtoxischen Dioxinen führen kann.

Die hiermit verbundenen Probleme sowie ein Verfahren zur Entfernung von Halogenen aus durch ATRP-Verfahren erhaltenen Polymeren sind beispielsweise in WO 99/54365 beschrieben. Dieses Dokument beschreibt ein Verfahren, bei dem man die lebenden Halogene in Doppelbindungen überführt, indem man das ATRP-Polymer mit einen Halogenatom als aktives Kettenende im Anschluß an die Polymerisation mit einer Verbindung umsetzt, welche eine begrenzt ATRPpolymerisierbare Doppelbindung aufweist. Die Verbindung mit der begrenzt polymerisierbaren Doppelbindung wird an das lebende Ende des ATRP-Polymers addiert und das lebende Halogenatom unter Ausbildung einer Doppelbindung eliminiert. Dabei werden als Verbindung mit der begrenzt polymerisierbaren Doppelbindung 1,1-Dimethylethylen, 1,1-Diphenylethylen, Vinylacetat, Isoprenylacetat, α-Methyl-Styrol, 1,1-Dialkoxyolefin, Dimethylitaconat und Diisobuten explizit offenbart.

In unpolaren Lösungsmitteln, wie beispielsweise Mineralölen, führt die Anwendung dieses Verfahrens jedoch nicht zu der gewünschten Eliminierung des lebenden Halogenatoms am aktiven Kettenende und der Ausbildung der endständigen Doppelbindung. Der lebende Halogen verbleibt vielmehr unverändert im Polymer.

Von der Technik werden jedoch Verfahren zur Herstellung von ATRP-Polymerzusammensetzungen mit reduzierten lebenden Halogengehalt am aktiven Kettenende gefordert, die in unpolaren Lösungsmitteln durchgeführt werden können. Solche Verfahren wären insbesondere für die Herstellung von Polymerprodukten, wie beispielsweise Mineralölzusätzen, die in unpolaren Lösungsmitteln eingesetzt werden, überaus vorteilhaft, weil der ansonsten notwendige Lösungsmittelwechsel-Schritt entfällt. Vielmehr könnten die gewünschten Zusammensetzungen direkt hergestellt werden.

Die Druckschrift M. Bednarek, T. Biedroni, P. Kubisa "Synthesis of block copolymers by atom transfer radical polymerization of tert-butyl acrylate with poly(oxyethylene) macroinitiators" Macromol. Rapid Commun. 20, 59-65 (1999) beschreibt die ATRP-Substanzpolymerisation von tert-Butylacrylat unter Verwendung eines Polyoxyethylen-Makroinitiators. Als Katalysator wird CuBr als Ligand wird Pentamethyldiethylentriamin (PMDETA) eingesetzt. Während dieser Polymerisation wird in einer Nebenreaktion das lebende Halogen am aktiven Kettenende durch Wasserstoff ausgetauscht. Dabei wird eine Beteiligung des PMDETA an der Austauschreaktion durch die Autoren nicht ausgeschlossen (Seite 65, 1. Absatz). Ein Verfahren zur gezielten Entfernung des lebenden Halogens am aktiven Kettenende des ATRP-Polymers und zur Bildung eines Polymers mit einer endständigen Doppelbindung wird durch diese Druckschrift nicht offenbart.

In Anbetracht des Standes der Technik war es nun Aufgabe der vorliegenden Erfindung, Verfahren zur Herstellung von Polymerzusammensetzungen mit reduziertem Halogengehalt zur Verfügung zu stellen, wobei das lebende Halogen am aktiven Kettenende im wesentlichen entfernt werden sollte.

Eine weitere Aufgabe bestand darin, ein kostengünstig durchführbares Verfahren anzugeben, das großtechnisch anwendbar ist. Darüber hinaus sollte das Verfahren mit kommerziell erhältlichen Komponenten leicht und einfach ausführbar sein.

Darüber hinaus sollte durch die Umsetzung eine Verbreiterung der Molekulargewichtsverteilung der Polymerzusammensetzung vermieden werden.

Des weiteren war es eine Aufgabe der vorliegenden Erfindung ein Verfahren zur Herstellung von Polymerzusammensetzungen mit reduziertem Halogengehalt zu schaffen, bei dem ein Abbau der in der Zusammensetzung enthaltenen Polymere vermieden wird.

Weiterhin sollten Polymerzusammensetzungen gefunden werden, die ein hervorragendes Eigenschaftsspektrum aufweisen, so daß diese als ideales Additiv zu Schmierölen zugefügt werden können.

Dies bedeutet unter anderem, daß die in der Zusammensetzung enthaltenen Polymere eine geringe Oxidadonsempfindlichkeit und, eine hohe Beständigkeit gegen Scherbelastungen aufweisen.

Insbesondere sollten die in der Polymerzusammensetzung enthaltenen Polymere eine enge Molekulargewichtsverteilung aufweisen und im wesentlichen halogenfrei sein.

Gelöst werden diese sowie weitere nicht explizit genannten Aufgaben, die jedoch aus den hierin einleitend diskutierten Zusammenhängen ohne weiteres ableitbar oder erschließbar sind, durch ein Verfahren zur Herstellung einer Polymerzusammensetzung mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt. Hinsichtlich der Polymerzusammensetzungen liefert der unabhängige Produktanspruch eine Lösung der zugrunde liegenden Aufgabe, während der Anspruch aus der Verwendungskategorie eine bevorzugte Verwendung einer gemäß dem vorliegenden Verfahren hergestellten Polymerlösung schützt.

Dadurch, daß man nach der Polymerisation die Polymerzusammensetzung in Gegenwart eines unpolaren Lösungsmittels mit mindestens einer organischen Stickstoffverbindung umsetzt, gelingt es auf nicht ohne weiteres vorhersehbare Weise ein Verfahren zur Herstellung einer Polymerzusammensetzung zur Verfügung zu stellen, mit welchem eine Reduktion des lebenden Halogenanteils der Polymere direkt in einem unpolaren Lösungsmittel erzielt werden kann.

Hierbei polymerisiert man ethylenisch ungesättigte Monomere mittels Initiatoren, die ein übertragbares Halogen aufweisen, und einem oder mehrere Katalysatoren, die mindestens ein Übergangsmetall umfassen, in Gegenwart von Liganden, die mit dem oder den metallischen Katalysatoren eine Koordinationsverbindung bilden können. Diese Herstellungsart ist besonders kostengünstig durchführbar und insofern technisch interessant.

Zugleich lassen sich durch das erfindungsgemäße Verfahren eine Reihe weiterer Vorteile erzielen. Hierzu gehören unter anderem:
⇒ Eine enge Verteilung der Polymere in den durch das Verfahren hergestellten Polymerzusammensetzungen.
⇒ Das erfindungsgemäße Verfahren erlaubt eine hervorragende Kontrolle des Molekulargewichts der in den Zusammensetzungen enthaltenen Polymeren.
⇒ Hinsichtlich Druck, Temperatur und Lösungsmittel ist die Durchführung der Polymerisation relativ unproblematisch, auch bei moderaten Temperaturen werden unter bestimmten Umständen akzeptable Ergebnisse erzielt.
⇒ Das erfindungsgemäße Verfahren ist arm an Nebenreaktionen.
⇒ Das Verfahren ist kostengünstig durchführbar.
⇒ Durch das Verfahren wird das Polymer nicht oder nur unwesentlich abgebaut.
⇒ Mit Hilfe des erfindungsgemäßen Verfahrens lassen sich hohe Ausbeuten erzielen.
⇒ Im wesentlichen werden Doppelbindungen durch die Umsetzung mit der organischen Stickstoffverbindung gebildet. Diese können gegebenenfalls für weitere polymeranaloge Umsetzungen genutzt werden.
⇒ Mit Hilfe des Verfahrens der vorliegenden Erfindung können Polymere mit einem vorher definierten Aufbau und gezielter Struktur hergestellt werden.
⇒ Die durch das Verfahren der vorliegenden Erfindung erhältlichen Polymerzusammensetzungen sind gegen oxidativen Abbau und gegenüber Scherbeanspruchung relativ stabil.

Die halogenreduzierende Umsetzung der durch die ATRP-Verfahren gewonnenen Polymere mit einer organischen Stickstoffverbindung findet in Gegenwart eines unpolaren Lösungsmittels statt.

Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle und synthetische Öle sowie Mischungen hiervon. Von diesen sind Mineralöle ganz besonders bevorzugt.
Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphtenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-% . Gemäß einem interessanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll.
Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
0,7 - 1,0 %,
gering verzweigte Alkane mit 18 bis 31 C-Atome:
1,0 - 8,0 % ,
Aromaten mit 14 bis 32 C-Atomen:
0,4 - 10,7 % ,
Iso- und Cyclo-Alkane mit 20 bis 32 C-Atomen:
60,7- 82,4 %,
polare Verbindungen:
0,1 - 0,8 %,
Verlust:
6,9 - 19,4 % .

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5^{th} Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit. Zur Verdeutlichung soll noch auf die 5 API-Klassen der Grundöltypen (API: American Petroleum Institute) hingewiesen werden, wobei diese Grundöle besonders bevorzugt als Lösungsmittel eingesetzt werden können.
Diese Lösungsmittel werden vor oder während der Umsetzung zur Reduzierung des Halogenanteils der Polymere, vorzugsweise in einer Menge von 1 bis 99 Gew.-%, besonders bevorzugt von 5 bis 95 Gew.-% und ganz besonders bevorzugt von 10 bis 60 Gew.-%, bezogen auf das Gesamtgewicht der Mischung, eingesetzt. Die Zusammensetzung kann während der Umsetzung mit einer organischen Stickstoffverbindung auch polare Lösungsmittel aufweisen, wobei deren Menge jedoch dadurch begrenzt wird; daß diese Lösungsmittel keine unvertretbar nachteilige Wirkung auf die halogenreduzierende Umsetzung ausüben dürfen.

Erfindungsgemäß werden die im Polymer als aktives Zentrum enthaltenden lebenden Halogene zumindest teilweise eliminiert. Dabei bezeichnet der Begriff "lebende Halogene" die an die reaktiven Zentren am Kettenende gebundenen Halogene. Die reaktiven Zentren bleiben auch nach vollständiger "lebender" radikalischer Polymerisation (ATRP) der zunächst eingesetzten Monomeren intakt und ermöglichen so die Addition weiterer Monomere. Vorzugsweise weist jedes Polymer zunächst ein lebendes Halogen auf, jedoch sind auch mehr als ein lebende Halogene pro Polymerkette denkbar. Das das lebende Halogen enthaltende aktive Kettenende wird durch die Eliminierung vorzugsweise in eine Doppelbindung umgewandelt.

Im Rahmen der vorliegenden Erfindung wird zur Reduktion des lebenden Halogengehalts der Polymere eine organische Stickstoffverbindung eingesetzt. Organische Stickstoffverbindungen sind an sich bekannt. Sie weisen neben einem oder mehreren Stickstoffatomen Alkyl-, Cycloalkyl- oder Arylgruppen, wobei das Stickstoffatom auch Bestandteil einer cyclischen Gruppe sein kann, auf.

Bevorzugt sind organische Stickstoffverbindung, die Metallatome binden oder als Liganden dienen können. Derartige Verbindungen werden später im Text als Liganden beschrieben. Diese als Liganden verwendbaren organischen Stickstoffverbindungen sind unter an in WO 97/18247, WO 98/40415 und WO 97/47661 beschrieben.

Hierzu gehören unter anderem heterocyclische, aromatische Stickstoffverbindungen. Dies sind aromatische Verbindungen, die cyclische Reste mit 4 bis 12 Kohlenstoffatome aufweisen, bei denen ein oder mehrere der CH-Gruppen des aromatischen Ringes durch Stickstoffatome ersetzt sind.

Hierzu gehören insbesondere Verbindungen, die ein oder mehrere Pyrrol-, Imidazol-, Indol-, Chinolin-, Isochinolin-, Pyrimidin- oder Pyridingruppen enthalten. Beispiele für derartige Verbindungen sind 2,2-Bipyridin, Alkyl-2,2-bipyridin, wie 4,4-Di-(5-nonyl)-2,2-bipyridin, 4,4-Di-(5-heptyl)-2,2 Bipyridin.

Des weiteren sind organische Stickstoffverbindungen bevorzugt, die aliphatische Gruppen aufweisen. Es handelt sich hierbei um Verbindungen, die neben dem Stickstoffatom gesättigte oder ungesättigte Alkylgruppen oder Cycloalkylgruppen aufweisen.

Viele dieser organischen Stickstoffverbindungen lassen sich im allgemeinen durch die Formel R³¹-Z-(R³³-Z)ₘ-R³² darstellen, worin R³¹ und R³² unabhängig H, C₁ bis C₂₀ Alkyl, Aryl, Heterocyclyl bedeuten, die ggf. substituiert sein können und m eine ganze Zahl im Bereich von 0 bis 10, bevorzugt 1 bis 3 darstellt. Zu diesen Substituenten zählen u. a. Alkoxyreste und die Alkylaminoreste. R³¹ und R³² können ggf. einen gesättigten, ungesättigten oder heterocyclischen Ring bilden. Besonders bevorzugt stellen R³¹ und R³² Wasserstoff, Methyl, Ethyl und Propyl dar, wobei von diesen Methyl bevorzugt ist. Z bedeutet NH oder NR³⁴, wobei R³⁴ die gleiche Bedeutung wie R³¹ hat. Besonders bevorzugt stellt R³⁴ Wasserstoff, Methyl, Ethyl und Propyl dar, wobei von diesen Methyl bevorzugt ist. R³³ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen-, Butylen- oder Cyclohexylengruppe.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; armoatische Gruppen, wie Phenyl oder Nahphthyl; Aminogruppen, Ethergruppen, Estergruppen sowie Halogenide.

Heterocyclylreste sind cyclische Reste mit 4 bis 12 Kohlenstoffatome, bei denen ein oder mehrere der CH₂-Gruppen des Ringes durch Heteroatomgruppen, wie O, S, NH, und/oder NR, ersetzt sind, wobei der Rest R, die gleich Bedeutung hat, wie R³¹ hat.

Bevorzugte aliphatische Stickstoffverbindungen sind Tris(2-aminoethyl)amin (TREN), Tributylamin, N,N-Diphenyl-1,4-phenylendiamin, C₁₃H₂₇-NH₂, N,N,N',N',N"-Pentamethyldiethylentriamin (PMDETA), 1,1,4,7,10,10-Hexamethyltriethlyentetramin und/oder Tetramethylethylendiamin (TMEDA), Diethylentriamin (DETA).

Des weiteren sind organische Stickstoffverbindungen besonders bevorzugt, an deren Stickstoffatom mindestens eine Methylgruppe gebunden ist, wie Hexamethyltriethlyentetramin, PMDETA oder TMEDA.

Diese Verbindungen können einzeln oder als Mischung eingesetzt werden. Die Menge richtet sich nach dem lebenden Halogengehalt der Zusammensetzung. Bevorzugt beträgt das molare Verhältnis organische Stickstoffverbindung zu lebendes Halogen 0,5:1 bis 10:1, zweckmäßigerweise 0,5:1 bis 4:1, insbesondere 1,25:1 bis 4:1.

Besonders überraschend war, daß mit Hilfe organischer Stickstoffverbindungen, die während der Polymerisation als Liganden eingesetzt werden können, eine Reduktion des lebenden Halogengehalts erzielt werden kann, obwohl dieser Austausch zu einer Abbruchreaktion führt. Dementsprechend wird der Anteil der organischen Stickstoffverbindungen vorzugsweise nach Abschluß der Polymerisation auf die zuvor angegebenen Mengen erhöht.

Es wird angenommen, daß während der Umsetzung ebenfalls metallhaltige - Katalysatoren sowie Liganden, die vorzugsweise Stickstoff enthalten, anwesend sein müssen.

Besonders überraschend wurde festgestellt, daß jedoch der Umsatz der Reaktion, die zur Verringerung des lebenden Halogenanteils des Polymers führt, erhöht werden kann, wenn die organische Stickstoff, die vorzugsweise als Ligand dient, gegenüber dem Metall im Überschuß vorhanden ist, ohne daß hierauf eine Beschränkung erfolgen soll.

Die Umsetzung des lebendes Halogen enthaltendenPolymers mit der organischen Stickstoffverbindung kann bei Normaldruck, Unter- od. Überdruck durchgeführt werden. Auch die Reaktionstemperatur ist unkritisch. Im allgemeinen liegt sie jedoch im Bereich von -20° - 200°C, vorzugsweise 20° - 200°C und besonders bevorzugt 90° - 150°C, ohne daß hierdurch eine Beschränkung erfolgen soll. Die Dauer der Umsetzung hängt von den zuvor beschriebenen Parametern ab. Üblicherweise zeigt sich eine starke Abnahme des lebenden Halogenanteils bereits nach einer Stunde, ohne daß hierdurch eine Einschränkung erfolgen soll. Möchte man einen möglichst vollständigen Austausch erzielen, so wird teilweise eine längere Reaktionsdauer erforderlich sein, die im Bereich von 2 bis 48 Stunden liegen kann.

Charakteristisch für die Umsetzung gemäß der vorliegenden Erfindung ist, daß hierdurch zumindest teilweise die im Polymer enthaltenen lebenden Halogenatome eliminiert werden. Diese Angabe bezieht sich auf den lebenden Halogengehalt der Polymere, d. h. dem Gehalt an lebendem Halogen, vor und nach der Umsetzung, wobei der Begriff teilweise eine Reduktion des Gehalts beispielsweise um 5 Gew.-%, jeweils bezogen auf den Ausgangsgehalt an lebenden Halogenen, darstellen kann.

In bevorzugten Ausführungsformen des erfindungsgemäßen Verfahrens ist die Reduktion des lebenden Halogengehalts wesentlich größer, so daß bevorzugt der lebende Halogengehalt auf 60 Gew.-%, besonders bevorzugt auf 30 Gew.-% und ganz besonders bevorzugt auf 5 Gew.-%, jeweils bezogen auf den Ausgangsgehalt an lebenden Halogenen, reduziert wird, ohne daß hierdurch eine Beschränkung erfolgen soll.

Bevorzugt durch das Verfahren der vorliegenden Erfindung erhältliche Polymere weisen vorzugsweise einen lebenden Halogengehalt kleiner oder gleich 1000ppm, zweckmäßigerweise kleiner oder gleich 600ppm, insbesondere kleiner oder gleich 200ppm und besonders bevorzugt kleiner oder gleich 100ppm, bezogen auf das Gesamtgewicht der Zusammensetzung auf.

In der vorliegenden Erfindung kann jedes radikalisch polymerisierbare Monomer als Monomer dienen. Jedoch sind Monomere zur Polymerisation gemäß der vorliegenden Erfindung besonders geeignet, die der Formel entsprechen: 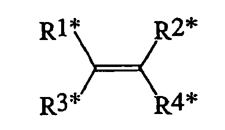 worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+ 1) Halogenatomen substituiert sein können, wobei n die Zahl der Kohlenstoffatome der Alkylgruppe ist (beispielsweise CF₃), α, β-ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; C(=Y*)R^{5*}, C(=Y^{*})NR^{6*}R^{7*}, Y^{*}C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y*NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind;
R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)_{n'} bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Zu diesen Monomeren gehören unter anderem Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether; Maleinsäurederivate, wie beispielsweise Maleinsäureanhydrid, Methylmaleinsäureanhydrid, Maleinimid, Methylmaleinimid;
Diene wie beispielsweise Divinylbenzol; und (Meth)acrylate.

Bevorzugte Monomere sind (Meth)acrylate. Der Ausdruck (Meth)acrylate umfaßt Methacrylate und Acrylate sowie Mischungen aus beiden. Diese Monomere sind weithin bekannt. Zu diesen gehören unter anderem (Meth)acrylate, die sich von gesättigten Alkoholen ableiten, wie Methyl(meth)acrylat, Ethyl(meth)acrylat, Propyl(meth)acrylat, Butyl(meth)acrylat, Pentyl(meth)acrylat, Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Mcthylhexadecyl(meth)acrylat, Heptadecyl(meth)acrylät, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;
(Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat usw.;
Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol, N-(3-Dibutylaminopropyl)(meth)acrylamid, N-t-Butyl-N-(diethylphosphono)(meth)acrylamid, N,N-bis(2-Diethylaminoethyl)(meth)acrylamid, 4-Methacryloylamido-4-methyl-2-pentanol, Methacryloylamidoacetonitril, N-(Methoxymethyl)(meth)acrylamid, N-(2-Hydroxyethyl)(meth)acrylamid, N-(Dimethylaminoethyl)(meth)acrylamid, N-Methyl-N-phenyl(meth)acrylamid, N,N-Diethyl(meth)acrylamid, N-Acetyl(meth)acrylamid, N-Methyl(meth)acrylamid, N,N-Dimethyl(meth)acrylamid, N-Isopropyl(meth)acrylamid;
Aminoalkyl(meth)acrylate, wie tris(2-(meth)acryloxyethyl)amin, N-Methylformamidoethyl(meth)acrylat, 3-Diethylaminopiopyl(meth)acrylat, 4-Dipropylaminobutyl(meth)acrylat, 2-Ureidoethyl(meth)acrylat;
andere stickstofihaltige (meth)acrylate, wie N-((Meth)acryloyloxyethyl)diisobutylketimin, 2-(Meth)acryloyloxyethylmethylcyanamid, Cyanomethyl(meth)acrylat;
Aryl(meth)acrylate, wie Benzyl(meth)acrylat oder Phenyl(meth)acrylat, wobei die Arylreste jeweils unsubstituiert oder bis zu vierfach substituiert sein können;
carbonylhaltige Methacrylate, wie 2-Carboxyethyl(meth)acrylat, N-(2-Methacryloyloxyethyl)-2-pyrrolidinon, N-(3-Methacryloyloxypropyl)-2-pyrrolidinon, Carboxymethyl(meth)acrylat, N-Methacryloylmorpholin, Oxazolidinylethyl(meth)acrylat, N-(Methacryloyloxy)formamid, Acetonyl(meth)acrylat, N-Methacryloyl-2-pyrrolidinon;
Cycloalkyl(meth)acrylate, wie 3-Vinylcyclohexyl(meth)acrylat,
Bornyl(meth)acrylat;
Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat;
Glycoldi(meth)acrylate, wie 1,4-Butandiol(meth)acrylat, Methacrylate von Etheralkoholen, wie Tetrahydrofurfuryl(meth)acrylat, Vinyloxyethoxyethyl(meth)acrylat, Methoxyethoxyethyl(meth)acrylat, 1-Butoxypropyl(meth)acrylat, 1-Methyl-(2-vinyloxy)ethyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2-Butoxyethyl(meth)acrylat, 2-Ethoxyethoxymethyl(meth)acrylat, 2-Ethoxyethyl(meth)acrylat, Allyloxymethyl(meth)acrylat, 1-Ethoxybutyl(meth)acrylat, Methoxymethyl(meth)acrylat, 1-Ethoxyethyl(meth)acrylat, Ethoxymethyl(meth)acrylat; Methacrylate von halogenierten Alkoholen, wie 2,3-Dibromopropyl(meth)acrylat, 4-Bromophenyl(meth)acrylat, 1,3-Dichloro-2-propyl(meth)acrylat, 2-Bromoethyl(meth)acrylat, 2-Iodoethyl(meth)acrylat, Chloromethyl(meth)acrylat;
Oxiranyl(meth)acrylate, wie 10, 11-Epoxyundecyl(meth)acrylat, 2,3-Epoxycyclohexyl(meth)acrylat, 2,3-Epoxybutyl(meth)acrylat, 3,4-Epoxybutyl(meth)acrylat, Glycidyl(meth)acrylat;
Phosphor-, Bor- und/oder Silicium-haltige Methacrylate, wie 2-(Dibutylphosphono)ethyl(meth)acrylat, 2, 3-Butylen(meth)acryloylethylborat, 2-(Dimethylphosphato)propyl(meth)acrylat, Methyldiethoxy(meth)acryloylethoxysilan, 2-(Ethylenphosphito)propyl(meth)acrylat, Dimethylphosphinomethyl(meth)acrylat, Dimethylphosphonoethyl(meth)acrylat, Diethyl(meth)acryloylphosphonat, Diethylphosphatoethyl(meth)acrylat, Dipropyl(meth)acryloylphosphat;
schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; Tri(meth)acrylate, wie Trimethyloylpropantri(meth)acrylat;
heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon.

Besonders bevorzugt sind (Meth)acrylate, die sich von gesättigten Alkoholen mit 1 bis 40 C-Atomen, vorzugsweise 6 bis 24 C-Atome ableiten, wobei der Alkoholrest linear oder verzweigt sein kann.

Die Esterverbindungen mit langkettigem Alkoholrest, lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial 125 von Augusta® Mailand; Dehydad® und Lorol® von Henkel KGaA sowie Linopol® 7 - 11 und Acropol® 91 Ugine Kuhlmann.

Die zuvor genannten ethylenisch ungesättigten Monomere können einzeln oder als Mischungen eingesetzt werden. In bevorzugten Ausführungsformen des erfindungsgemäßen Verfahrens sind mindestens 50 Gewichtsprozent der Monomere, vorzugsweise mindestens 60 Gewichtsprozent der Monomere, besonders bevorzugt mehr als 80 Gew.-% der Monomere, bezogen auf das Gesamtgewicht der ethylenisch ungesättigten Monomere, (Meth)acrylate. Es ist des weiteren möglich, die Monomerzusammensetzung während der Polymerisation zu variieren, um definierte Strukturen, wie beispielsweise Blockcopolymere, zu erhalten.

Darüber hinaus sind Monomerzusammensetzungen bevorzugt, die mindestens 60 Gewichtsprozent, besonders bevorzugt mehr als 80 Gew.-% (Meth)acrylate mit Alkyl- oder Heteroalkylketten enthalten, die mindestens 6 Kohlenstoffatome aufweisen, bezogen auf das Gesamtgewicht der ethylenisch ungesättigten Monomere.

Neben den (Meth)acrylaten sind auch Maleate und Fumarate bevorzugt, die vorzugsweise ebenfalls langkettige Alkoholreste aufweisen.

So umfaßt beispielsweise eine ganz besonders bevorzugte , Monomerzusammensetzung folgende ethylenisch ungesättigte Monomere:
a) 60 bis 100 Gew.-%, insbesondere 80 bis 100 Gew.-%, eines oder mehrerer (Meth)acrylate der Formel (I) 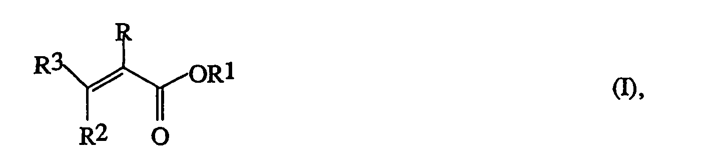 worin R Wasserstoff oder Methyl, R¹ einen linearen oder verzweigten Alkylrest mit 6 bis 40 Kohlenstoffatomen, vorzugsweise 6 bis 24 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 6 bis 40 Kohlenstoffatomen darstellt,
b) 0 bis 40 Gew.- % , insbesondere 0,5 bis 20 Gew.- % , eines oder mehrerer (Meth)acrylate der Formel (II) 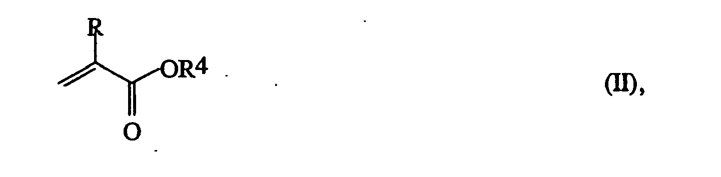 worin R Wasserstoff oder Methyl und R⁴ einen linearen oder verzweigten Alkylrest mit 1 bis 5 Kohlenstoffatomen bedeuten,
c) 0 bis 40 Gew.-%, insbesondere 0,5 bis 20 Gew.-%, eines oder mehrerer (Meth)acrylate der Formel (III) 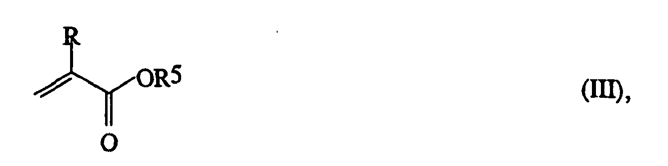 worin R Wasserstoff oder Methyl und R⁵ einen mit einer OH-Gruppe substituierten Alkylrest mit 2 bis 20, insbesondere 2 bis 6 Kohlenstoffatomen oder einen alkoxylierten Rest der Formel (IV) 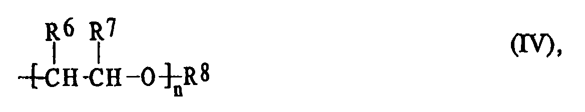 worin R⁶ und R⁷ unabhängig für Wasserstoff oder Methyl, R⁸ Wasserstoff oder einen Alkylrest mit 1 bis 40 Kohlenstoffatomen und n eine ganze Zahl von 1 bis 60 steht, bedeuten,
d) 0 bis 40 Gew.-%, insbesondere 0,5 bis 20 Gew.-% eines oder mehrerer (Meth)acrylate der Formel (V) 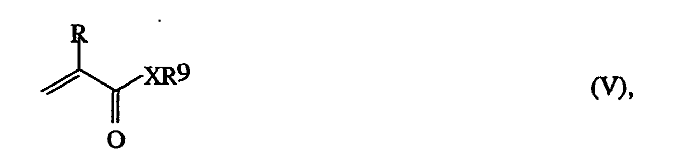 worin R Wasserstoff oder Methyl, X Sauerstoff oder eine Aminogruppe der Formel -NH- oder -NR¹⁰-, worin R¹⁰ für einen Alkylrest mit 1 bis 40 Kohlenstoffatomen steht, und R⁹ einen mit mindestens einer -NR¹¹R¹²-Gruppe substituierten linearen oder verzweigten Alkylrest mit 2 bis 20, vorzugsweise 2 bis 6 Kohlenstoffatomen bedeuten, wobei R¹¹ und R¹² unabhängig von einander für Wasserstoff, einen Alkylrest mit 1 bis 20, vorzugsweise 1 bis 6 stehen oder worin R¹¹ und R¹² unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann, und
e) 0 bis 40 Gew.-%, insbesondere 0,5 bis 20 Gew.-% eines oder mehrerer Comonomere, wobei sich die Angabe Gew.-% jeweils auf das Gesamtgewicht der ethylenisch ungesättigten Monomere bezieht.

Beispiele dieser Monomere wurden zuvor dargelegt.

Comonomere sind ethylenisch ungesättigte Monomere, die sich mit den (Meth)acrylaten der Formeln I, II, III und/oder V copolymerisieren lassen. Neben Styrol sind als Comonomere insbesondere Monomere bevorzugt, die dispergierende Wirkungen haben, wie beispielsweise die zuvor genannten heterocyclischen Vinylverbindungen.

Es soll an dieser Stelle darauf verwiesen werden, daß halogenhaltige Monomere während der Polymerisation in das Polymer eingebaut werden können. Diese Monomere stören also weder die Polymerisation noch die anschließende Halogenreduktion, da durch die erfindungsgemäße Umsetzung des ATRP-Polymers mit mindestens einer organischen Verbindung lediglich die lebenden Halogene eliminiert werden. Dennoch werden im Rahmen der vorliegenden Erfindung halogenfreie Monomere gegenüber denjenigen Monomeren, die Halogene enthalten, bevorzugt.

Die zuvor genannten Monomere werden mittels Initiatoren, die eine übertragbares Halogen aufweisen, polymerisiert. Im allgemeinen lassen sich diese Initiatoren durch die Formel Y-(X)ₘ beschreiben, worin Y das Kernmolekül darstellt, von dem angenommen wird, daß es Radikale bildet, X ein übertragbares Halogen repräsentiert und m eine ganze Zahl im Bereich von 1 bis 10 darstellt, abhängig von der Funktionalität der Gruppe Y. Falls m > 1 ist, können die verschiedenen übertragbaren Halogene X eine unterschiedliche Bedeutung haben. Ist die Funktionalität des Initiators > 2, so werden sternförmige Polymere erhalten. Bevorzugte übertragbare Halogene sind Cl, Br und/oder J.
Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und -CO₂R, wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl; Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; armoatische Gruppen, wie Phenyl oder Nahphthyl; Aminogruppen, Ethergruppen, Estergruppen sowie Halogenide.

Zu den aromatischen Resten gehören beispielsweise Phenyl, Xylyl, Toluyl, Naphtyl oder Biphenylyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.
Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

R¹¹R¹²R¹³C-X

R¹¹C(=O)-X

R¹¹R¹²R¹³Si-X

R¹¹R¹²N-X

R¹¹N-X₂

(R¹¹)ₙP(O)ₘ-X₃₋ₙ

(R¹¹O)ₙP(O) ₘ-X₃₋ₙ und

(R¹¹)(R¹²O)P(O)ₘ-X,

worin X ausgewählt ist aus der Gruppe bestehend aus Cl, Br, I; und
R¹¹, R¹² und R¹³ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, R^{8*}₃Si, C(=Y*)R^{5*}, C(=Y*)NR^{6*}R^{7*}, wobei Y*, R^{5*}, R^{6*} und R^{7*} wie zuvor definiert sind, COCI, OH, (vorzugsweise ist einer der Reste R¹¹, R¹² und R¹³ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei C₁ bis C₆ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus C₁-C₄ Alkoxy, Aryl, Heterocyclyl, C(=Y*)R^{5*} (wobei R^{5*} wie zuvor definiert ist), C(=Y*)NR^{6*}R^{7*} (wobei R^{6*} und R^{7*} wie zuvor definiert sind), Oxiranyl und Glycidyl substituiert sind; (vorzugsweise sind nicht mehr als 2 der Reste R¹¹, R¹²und R¹³ Wasserstoff, besonders bevorzugt ist maximal einer der Reste R¹¹, R¹² und R¹³ Wasserstoff);
m=0 oder 1; und n=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan;
Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat;
Tosylhalogenide, wie p-Toluolsulfonylchlorid; Alkylhalogenide, wie Tetrachlormethan, Tribrommethan, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von 10⁻⁴ mol/l bis 3 mol/l, vorzugsweise im Bereich von 10⁻³ mol/l bis 10⁻¹ mol/l und besonders bevorzugt im Bereich von 5*10⁻² mol/l bis 5*10⁻¹ mol/l eingesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis im Bereich von 10⁻⁴ zu 1 bis 0,5 zu 1, besonders bevorzugt im Bereich von 1*10⁻³ zu 1 bis 5*10⁻² zu 1.

Zur Durchführung der Polymerisation werden Katalysatoren eingesetzt, die mindestens ein Übergangsmetall umfassen. Hierbei kann jede Übergangsmetallverbindung eingesetzt werden, die mit dem Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. erniedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die Übertragbare Atomgruppe die Insertion von ethylenisch ungesättigten Monomeren in die Bindung Y-X bzw. Y(M)_{z}-X ermöglicht bzw. erleichtert wird, wobei Y und X die zuvor genannten Bedeutung haben und M die Monomeren bezeichnet, während z den Polymerisationsgrad darstellt.

Bevorzugte Übergangsmetalle sind hierbei Cu, Fe, Co, Cr, Ne, Sm, Mn, Mo, Ag, Zn, Pd, Pt, Re, Rh, Ir, In, Yb, und/oder Ru, die in geeigneten Oxidationsstufen eingesetzt werden. Diese Metalle können einzeln sowie als Mischung eingesetzt werden. Es wird angenommen, daß diese Metalle die Redox-Zyklen der Polymerisation katalysieren, wobei beispielsweise das Redoxpaar Cu⁺/Cu²⁺ oder Fe²⁺/Fe³⁺ wirksam ist. Dementsprechend werden die Metallverbindungen als Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören Cu₂O, CuBr, CuCl, CuI, CuN₃, CuSCN, CuCN, CuNO₂, CuNO₃, CuBF₄, Cu(CH₃COO) Cu(CF₃COO), FeBr₂, RuBr₂, CrCl₂ Und NiBr₂.

Es können aber auch Verbindungen in höheren Oxidationsstufen, wie beispielsweise CuBr₂, CuCl₂, CuO, CrCl3, Fe₂O₃ und FeBr₃, eingesetzt werden. In diesen Fällen kann die Reaktion mit Hilfe klassischer Radikalbildner, wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Darüber hinaus können die Übergangsmetalle als Metall in der Oxidationsstufe null, insbesondere in Mischung mit den zuvor genannten Verbindungen zur Katalyse verwendet werden, wie dies beispielsweise in WO 98/40415 dargestellt ist. In diesen Fällen läßt sich die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren.

Zu den bevorzugten Übergangsmetallen gehört metallisches Kupfer, das beispielsweise als Kupferblech, Kupferdraht, Kupferfolie, Kupferspäne, Kupfernetz, Kupfergeflecht, Kupfergewebe und/oder Kupferpulver sowie Kupferstaub der Reaktionsmischung zugegeben werden kann. Hierbei sind leicht wieder aus der Polymerzusammensetzung entfernbare Quellen, wie Kupferblech, Kupferdraht, Kupferfolie und Kupfergeflecht gegenüber weniger einfach abtrennbaren Quellen wie Kupferpulver oder Kupferstaub bevorzugt.

Das molare Verhältnis Übergangsmetall zu Initiator liegt im allgemeinen im Bereich von 0,0001:1 bis 10:1, vorzugsweise im Bereich von 0,001:1 bis 5:1 und besonders bevorzugt im Bereich von 0,01:1 bis 2:1, ohne daß hierdurch eine Beschränkung erfolgen soll.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewählten Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel R¹⁶-Z-(R¹⁸-Z)ₘ-R¹⁷ darstellen, worin R¹⁶ und R¹⁷ unabhängig H, C₁ bis C₂₀ Alkyl, Aryl, Heterocyclyl bedeuten, die ggf. substituiert sein können und m eine ganze Zahl im Bereich von 0 bis 10 darstellt. Zu diesen Substituenten zählen u. a. Alkoxyreste und die Alkylaminoreste. R¹⁶ und R¹⁷ können ggf. einen gesättigten, ungesättigten oder heterocyclischen Ring bilden. Z bedeutet O, S, NH, NR¹⁹ oder PR¹⁹, wobei R¹⁹ die gleiche Bedeutung wie R¹⁶ hat. R¹⁸ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cyclische Reste mit 4 bis 12 Kohlenstoffatome, bei denen ein oder mehrere der CH₂-Gruppen des Ringes durch Heteroatomgruppen, wie O, S, NH, und/oder NR, ersetzt sind, wobei der Rest R, die gleich Bedeutung hat, wie R¹⁶ hat.

Eine weitere Gruppe von geeigneten Liganden läßt sich durch die Formel 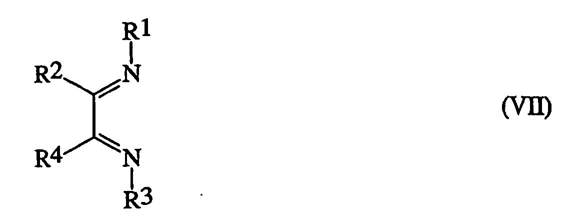 darstellen, worin R¹, R², R³ und R⁴ unabhängig H, C₁ bis C₂₀ Alkyl-, Aryl-, Heterocyclyl- und/oder Heteroarylrest bedeuten, wobei die Reste R¹ und R² bzw. R³ und R⁴ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N"-Pentamethyldiethylentriamin, 1,1,4,7,10,10-Hexamethyltriethlyentetramin und/oder Tetramethylethylendiamin. Weitere bevorzugte Liganden sind beispielsweise in WO 97/47661 beschrieben. Die Liganden können einzeln oder als Mischung eingesetzt werden.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall ist abhängig von der Zähnigkeit des Liganden und der Koordinationszahl des Übergangsmetalls. Im allgemeinen liegt das molare Verhältnis im Bereich 100:1 bis 0,1:1, vorzugsweise 6:1 bis 0,1:1 und besonders bevorzugt 3:1 bis 0,5:1, ohne daß hierdurch eine Beschränkung erfolgen soll.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall, der Liganden und dem Anion der Übergangsmetallverbindung. Wertvolle Hinweise zur Auswahl dieser Komponenten findet der Fachmann beispielsweise in WO 98/40415.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C, ohne daß hierdurch eine Beschränkung erfolgen soll.

Mit Hilfe des vorliegenden Verfahrens können Polymere mit einer vorgegebenen Architektur auf einfache Weise erhalten werden. Diese Möglichkeiten ergeben sich aus dem "lebenden" Charakter des Polymerisationsverfahrens. Zu diesen Strukturen gehören unter anderem Blockcopolymere, Gradientencopolymere, Sternpolymere, hochverzweigte Polymere, Polymere mit reaktiven Endgruppen und Pfropfcopolymere.

Von besonderem Interesse für das erfindungsgemäße Verfahren kann es sein, daß man in der Polymerzusammensetzung ein Copolymer mit einem nicht-statistischen Aufbau, vorzugsweise ein Diblock-, Triblock- oder ein Gradientenpolymer herstellt.

Die im Rahmen der Erfindung hergestellten Polymere weisen im allgemeinen ein Molekulargewicht im Bereich von 1 000 bis 1 000 000 g/mol, vorzugsweise im Bereich von 5*10³ bis 500*10³ g/mol und besonders bevorzugt im Bereich von 10*10³ bis 300*10³ g/mol auf, ohne daß hierdurch eine Beschränkung erfolgen soll. Diese Werte beziehen sich auf das Gewichtsmittel des Molekulargewichts der polydispersen Polymere in der Zusammensetzung.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen Polymere, die nach dem erfindungsgemäßen Verfahren erhalten wurden, eine Polydispersität, die durch *M_{w}*/*Mₙ* gegeben ist, im Bereich von 1 bis 12, vorzugsweise 1 bis 4,5, besonders bevorzugt 1 bis 3 und ganz besonders bevorzugt 1,05 bis 2 auf.

Die Polymerisation als Teilschritt des vorliegenden Herstellverfahrens kann mit oder ohne Lösungsmittel durchgeführt werden. Kennzeichnend für das Verfahren ist, daß eine Reduktion des Halogengehalts der sich in der Zusammensetzung befindlichen Polymere in einem unpolaren Lösungsmittel durch Umsetzung mit einer organischen Stickstoffverbindung stattfindet.

Dementsprechend kann ein entsprechendes Lösungsmittel vor dem Umsetzen mit einer organischen Stickstoffverbindung aber nach der Polymerisation zugeben werden, oder aber die Polymerisation findet in Gegenwart von einem unpolaren Lösungsmittel statt. Der Begriff des Lösungsmittels ist hierbei weit zu verstehen: Nicht umgesetzte Monomere, die nach der Polymerisation in der Zusammensetzung verblieben sind, können beispielsweise auch als Lösungsmittel dienen.

Als Maß für die Polarität des Lösungsmittels kann die Dielektrizitätskonstante dienen, die bevorzugt ≤ 4, vorzugsweise ≤ 3 und ganz besonders bevorzugt ≤ 2,5 ist. Dieser Wert wird bei 20°C bestimmt, wobei der Fachmann bezüglich der Messung wertvolle Hinweise in Ullmanns Encyklopädie der technischen Chemie, 1966, Band II/2, Seiten 455 bis 479 findet.

Gemäß einem interessanten Gesichtspunkt des erfindungsgemäßen Verfahrens kann der Katalysator nach der Polymerisation durch ein Fest-Flüssig-Trennverfahren abgetrennt werden. Hierzu gehören beispielsweise die Chromatographie, die Zentrifugation und die Filtration.

Vorzugsweise wird der Katalysator durch Filtration entfernt. Dazu wird nach der Polymerisation die Oxidationsstufe des Übergangsmetalls erhöht. Durch die Oxidation des Übergangsmetalls nimmt die Löslichkeit des Katalysators, je nach Wahl des oder der Liganden ab, so daß das Übergangsmetall durch Filtration abgetrennt werden kann, falls ein Lösungsmittel, insbesondere ein Mineralöl vorhanden ist, dessen Dielektrizitätskonstante ≤ 4, vorzugsweise ≤ 3 und besonders bevorzugt ≤ 2,5 ist.

Die Oxidation des Übergangsmetalls kann mit bekannten Oxidationsmitteln wie beispielsweise Sauerstoff, H₂O₂ oder Ozon durchgeführt werden. Vorzugsweise wird der Katalysator mit Luftsauerstoff oxidiert. Es ist keine vollständige Oxidation des Übergangsmetalls oder der Übergangsmetallverbindung notwendig. In vielen Fällen genügt ein Kontakt der Zusammensetzung mit Luftsauerstoff von wenigen Minuten, um eine ausreichende Ausfällung der Übergangsmetallverbindung zu gewährleisten.

Das Filtrieren ist an sich bekannt und beispielsweise in Ullmann's Encyclopedia of Industrial Chemistry, Fifth Edition, Stichwort "Filtration", beschrieben. Vorzugsweise wird die Zusammensetzung bei einer Druckdifferenz im Bereich von 0,1 bis 50 bar, vorzugsweise 1 bis 10 bar und besonders bevorzugt 1,5 bis 2,5 bar mit einem Filter einer Siebgröße im Bereich von 0,01 µm bis 1 mm, vorzugsweise 1 µm bis 100 µm und besonders bevorzugt 10 µm bis 100 µm gereinigt. Diese Angaben dienen als Anhaltspunkte, da die Reinigung auch von der Viskosität des Lösungsmittels und der Korngröße des Niederschlags abhängig ist.

Die Filtration findet in einem ähnlichen Temperaturbereich wie die Polymerisation statt, wobei der obere Bereich von der Stabilität des Polymeren abhängig ist. Die untere Grenze ergibt sich aus der Viskosität der Lösung.

Die so hergestellte Polymerzusammensetzung kann ohne weitere Reinigung beispielsweise als Additiv in Schmierölen verwendet werden. Darüber hinaus kann aus der Zusammensetzung das Polymer isoliert werden. Hierzu können die Polymere durch Fällung aus der Zusammensetzung abgeschieden werden.

Nachfolgend wird die Erfindung durch Beispiele und Vergleichsbeispiele eingehender erläutert, ohne daß die Erfindung auf diese Beispiele beschränkt werden soll.

### I) Angaben zu den Ausgangsstoffen und Methoden:

### I.1) Edukte

Das verwendete Alkylmethacrylatgemisch von C₁₂ bis C₁₈ Alkoholen, erhältlich durch Umesterung von MMA mit Lial 125 von Augusta® Mailand, wurde unter Berücksichtigung eines Reinheitsgrades von 98 % eingewogen. Cu₂O (Korngröße 5 µm), EBiB (Ethyl-2-bromoisobutyrat), PMDETA (Pentamethyldiethylentriamin), DETA (Diethylentriamin), TMEDA (Tetramethylethylendiamin) sowie Primine 81R (NH₂-C₁₃H₂₇) wurden von Aldrich bezogen und ebenso wie MMA (Methylmethacrylat; Röhm), unter Annahme eines 100%-igen Reinheitsgrades eingewogen. Bei dem verwendeten Mineralöl handelte es sich um ein Öl der Firma Shell (SM 920; Zusammensetzung: 0,84 % n-Alkane mit ca. 18 bis 31 C-Atomen, 5,16 % gering verzweigte Alkane mit 18 bis 31 C-Atomen, 8,8 % Aromaten mit 14 bis 32 C-Atomen, 71,4% Iso- und Cyclo-Alkane mit 20 bis 32 C-Atomen, 0,6% polare Verbindungen, 13,2 % Verlust). Zur Herstellung der Tonsil-Säule wurde Tonsil L80 FF von Südchemie verwendet.

### I.2 Analyse Methoden

Zur Aufarbeitung werden die Proben über eine Al2O3/Tonsil (2:1) Säule gereinigt. Hierdurch wurden alle Katalysatorreste sowie Ausfällungen abgetrennt. Anschließend wird die Proben nach Schöniger aufgeschlossen, wonach der Br-Gehalt argentometrisch bestimmt wird.

### II. Ausführung der Beispiele und Vergleichsbeispiele

### Beispiel 1

41,6 g (0.416 mol) MMA und 278,4 g eines Alkylmethacrylatgemisches von C₁₂ bis C₁₈ Alkoholen in 80 g Mineralöl wurden in einem mit Stickstoff durchfluteten 750 ml Vierhalskolben, ausgestattet mit Säbelrührer, Rückflußkühler sowie Innenthermometer, vorgelegt und durch Trockeneiszugabe inertisiert.

0,55 g (0.1 mol) PMDETA, gefolgt von 7,34 g (0.05 mol) feinpulvrigem Cu₂O wurden zugegeben, wonach das Reaktionsgemisch von Raumtemperatur auf 90°C aufgewärmt wurde. Sobald die Lösung die gewünschte Temperatur erreicht hatte, wurden 6,24 g (1 mol) Ebib zugegeben. Anschließend wurde die Temperatur auf 95°C erhöht. Nach 6 Stunden wurden 8,25 g (1,5 mol) PMDETA zugegeben, wonach die Temperatur auf 110°C erhöht wurde.

Nach 24 Stunden wurde eine Probe entnommen, die abgekühlt, aufgearbeitet und analysiert wurde.

Die entnommene Probe wies eine Polydispersität von 1,32 sowie einen Mₙ-Wert von 12900 g/mol auf, der mittels GPC bestimmt wurde. Ein Gramm der aufgereinigten Probe enthielt 8µg Kupfer und 38µg Brom.

### Beispiel 2

Die Durchführung der Polymerisation erfolgte wie in Beispiel 1, jedoch wurden nach .6 Stunden 16,5 g (3 mol) PMDETA zugegeben, wonach die Temperatur auf 110°C erhöht wurde.

Nach 24 Stunden wurde eine Probe entnommen, die abgekühlt, aufgearbeitet und analysiert wurde.

Die entnommene Probe wies eine Polydispersität von 1,27 sowie einen Mₙ-Wert von 13600 g/mol auf, der mittels GPC bestimmt wurde. Ein Gramm der aufgereinigten Probe enthielt 12 µg Kupfer und weniger als 50 µg Brom.

### Beispiel 3

Die Durchführung der Polymerisation erfolgte wie in Beispiel 1, jedoch wurden nach 6 Stunden 8,25 g (1,5 mol) PMDETA zugegeben, wonach die Temperatur auf 130°C erhöht wurde.

Nach 24 Stunden wurde eine Probe entnommen, die abgekühlt, aufgearbeitet und analysiert wurde.

Die entnommene Probe wies eine Polydispersität von 1,31 sowie einen Mₙ-Wert von 13100 g/mol auf, der mittels GPC bestimmt wurde. Ein Gramm der aufgereinigten Probe enthielt 11µg Kupfer und 95µg Brom.

Vergleichsbeispiel 1

Die Durchführung der Polymerisation erfolgte wie in Beispiel 1, jedoch wurde nach 6 Stunden ohne Zugabe von PMDETA die Temperatur auf 110°C erhöht.

Nach 24 Stunden wurde die Lösung abgekühlt, aufgearbeitet und analysiert. Ein Gramm der aufgereinigten Lösung enthielt 3875µg Brom, wobei das Polymer eine Polydispersität von 1,26 sowie einen Mn-Wert von 13000 g/mol aufwies, der mittels GPC bestimmt wurde.

### Beispiel 4

Die Durchführung der Polymerisation erfolgte wie in Beispiel 1, jedoch wurden nach 6 Stunden 2,2 g (0,4 mol) PMDETA und 66,06 g (0,45 mol) Cu₂O zugegeben, wonach die Temperatur auf 110°C erhöht wurde. Nach 24 Stunden wurde die Lösung abgekühlt, aufgearbeitet und analysiert. Ein Gramm der aufgereinigten Lösung enthielt 5µg Kupfer und 469µg Brom, wobei das Polymer eine Polydispersität von 1,30 sowie einen Mn-Wert von 14100 g/mol aufwies, der mittels GPC bestimmt wurde.

### Beispiel 5

Die Durchführung der Polymerisation erfolgte wie in Beispiel 1, jedoch wurden nach 6 Stunden 4,95 g (0,9 mol) PMDETA und 139,46 g (0,45 mol) Cu₂O zugegeben, wonach die Temperatur auf 110°C erhöht wurde.

Nach 24 Stunden wurde die Lösung abgekühlt, aufgearbeitet und analysiert. Ein Gramm der aufgereinigten Lösung enthielt 800µg Kupfer und 943µg Brom, wobei das Polymer eine Polydispersität von 1,32 sowie einen Mn-Wert von 14600 g/mol aufwies, der mittels GPC bestimmt wurde.

### Beispiel 6

Die Durchführung der Polymerisation erfolgte wie in Beispiel 1, jedoch wurden nach 6 Stunden 4,94 g (1,5 mol) DETA zugegeben, wonach die Temperatur auf 110°C erhöht wurde.

Nach 24 Stunden wird die Lösung abgekühlt, aufgearbeitet und analysiert. Ein Gramm der aufgereinigten Lösung enthielt 529µg Brom.

### Beispiel 7

Die Durchführung der Polymerisation erfolgte wie in Beispiel 1, jedoch wurden nach 6 Stunden 28,8 g (4,5 mol) Primine 81R zugegeben, wonach die Temperatur auf 110°C erhöht wurde.

Nach 24 Stunden wurde die Lösung abgekühlt, aufgearbeitet und analysiert. Ein Gramm der aufgereinigten Lösung enthielt 848µg Brom.

### Beispiel 8

Die Durchführung der Polymerisation erfolgte wie in Beispiel 1, jedoch wurden nach 6 Stunden 8,4 g (2,26 mol) TMEDA zugegeben, wonach die Temperatur auf 110°C erhöht wurde.

Nach 24 Stunden wurde die Lösung abgekühlt, aufgearbeitet und analysiert. Ein Gramm der auf gereinigten Lösung enthielt 199µg Brom.

### Beispiel 9

Die Durchführung der Polymerisation erfolgte wie in Beispiel 1, jedoch wurde nach der Zugabe von 8,25 g (1,5 mol) PMDETA nach 6 Stunden die Temperatur von 95°C beibehalten.

Nach 24 Stunden wurde die Lösung abgekühlt, aufgearbeitet und analysiert. Ein Gramm der aufgereinigten Lösung enthielt 89µg Brom.

### Vergleichsbeispiel 2

Die Durchführung der Polymerisation erfolgte wie in Beispiel 1, jedoch wurden nach 6 Stunden 8,4 g (1,5 mol) α-Methylstyrol zugegeben. Die Temperatur von 95°C wurde beibehalten.

Nach 24 Stunden wurde die Lösung abgekühlt, aufgearbeitet und analysiert. Ein Gramm der aufgereinigten Lösung enthielt 4625µg Brom.

## Patentansprüche

1. Verfahren zur Herstellung von Polymerzusammensetzungen mit reduziertem lebenden Halogengehalt, bei dem man ethylenisch ungesättigte Monomere mittels Initiatoren, die eine übertragbares Halogen aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert und nach der Polymerisation die im Polymer enthaltenen lebenden Halogenatome mindestens teilweise eliminiert, **dadurch gekennzeichnet, daß** man nach der Polymerisation die Polymerzusammensetzung in Gegenwart eines unpolaren Lösungsmittels mit mindestens einer organischen Stickstoffverbindung umsetzt.

2. Verfahren gemäß Anspruch 1, **dadurch gekennzeichnet, daß** man das unpolare Lösungsmittel in einer Menge von 5 bis 95 Gew.-%, bezogen auf das Gesamtgewicht, einsetzt.

3. Verfahren gemäß Anspruch 1 oder 2, **dadurch gekennzeichnet, daß** man als unpolares Lösungsmittel ein Mineralöl und/oder ein synthetisches Öl einsetzt.

4. Verfahren gemäß Anspruch 3, **dadurch gekennzeichnet, daß** man ein Mineralöl einsetzt, welches 0,5 bis 30 Gew.-% aromatische Anteile, 15 bis 40 Gew.-% naphthenische Anteile, 35 bis 80 Gew.-% paraffinische Anteile, bis zu 3 Gew.-% n-Alkane und 0,05 bis 5 Gew.-% polare Verbindungen, jeweils bezogen auf das Gesamtgewicht des Mineralöls, enthält.

5. Verfahren gemäß einem oder mehreren der vorhergehenden Ansprüche, **dadurch gekennzeichnet, daß** man als organische Stickstoffverbindung eine oder mehrere heterocyclische, aromatische Stickstoffverbindung einsetzt.

6. Verfahren gemäß Anspruch 5, **dadurch gekennzeichnet, daß** man als organische Stickstoffverbindung eine Verbindung einsetzt, die ein oder mehrere Pyridingruppen enthält.

7. Verfahren gemäß einem oder mehreren der vorhergehenden Ansprüche,
**dadurch gekennzeichnet, daß** man als organische Stickstoffverbindung eine oder mehrere aliphatische Stickstoffverbindung einsetzt.

8. Verfahren gemäß Anspruch 7, **dadurch gekennzeichnet, daß** man als organische Stickstoffverbindung ein Verbindung einsetzt, die ein oder mehrere Amingruppen enthält.

9. Verfahren gemäß Anspruch 8, **dadurch gekennzeichnet, daß** man als organische Stickstoffverbindung eine Aminverbindung einsetzt, an deren Stickstoffatom mindestens eine Methylgruppe gebunden ist, wie Hexamethyltriethylentetramin, PMDETA oder TMEDA.

10. Verfahren gemäß einem oder mehreren der vorhergehenden Ansprüche, **dadurch gekennzeichnet, daß** man die organische Stickstoffverbindung in einem Überschuß, bezogen auf den zur Polymerisation eingesetzten halogenhaltigen Initiator einsetzt.

11. Verfahren gemäß Ansprach 10, **dadurch gekennzeichnet, daß** das molare Verhältnis von organischer Stickstoffverbindung zu lebendem Halogen im Bereich von 0,5:1 bis 10:1 liegt.

12. Verfahren gemäß einem oder mehreren der vorhergehenden Ansprüche, **dadurch gekennzeichnet, daß** man nach der Polymerisation die Polymerzusammensetzung bei einer Temperatur im Bereich von -20 bis 200°C umsetzt.

13. Verfahren gemäß einem oder mehreren der vorhergehenden Ansprüche,
**dadurch gekennzeichnet, daß** man nach der Polymerisation die Polymerzusammensetzung für mindestens 1 Stunde mit der organischen Stickstoffverbindung umsetzt.

14. Verfahren gemäß einem oder mehreren der vorhergehenden Ansprüche, **dadurch gekennzeichnet, daß** man ethylenisch ungesättigte Monomere polymerisiert, die 50 bis 100 Gew.-%, bezogen auf das Gesamtgewicht der ethylenisch ungesättigten Monomere, einer oder mehrerer ethylenisch ungesättigten Esterverbindungen der Formel (I) 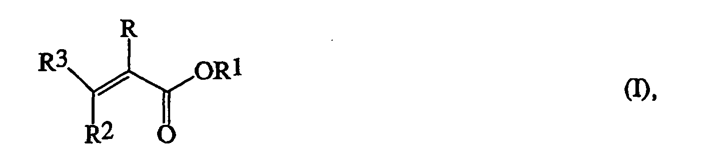 worin R Wasserstoff oder Methyl, R¹ einen linearen oder verzweigten Alkylrest mit 8 bis 40, vorzugsweise 10 bis 40, Kohlenstoffatomen, R² und R³ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt, aufweisen.

15. Verfahren nach einem oder mehreren der vorhergehenden Ansprüche, **dadurch gekennzeichnet, daß** man eine Monomerzusammensetzung polymerisiert aufweisend mindestens 50 Gew.-% eines oder mehrerer (Meth)acrylate der Formel (II) 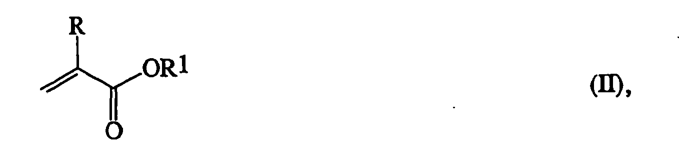 worin R Wasserstoff oder Methyl und R¹ einen linearen oder verzweigten Alkylrest mit 8 bis 40, vorzugsweise 10 bis 40, Kohlenstoffatomen bedeuten.

16. Verfahren nach einem oder mehreren der vorhergehenden Ansprüche, **dadurch gekennzeichnet, daß** man eine Monomerzusammensetzung polymerisiert aufweisend
a) 60 bis 100 Gew.-% einer oder mehreren ethylenisch ungesättigten Esterverbindungen der Formel (I) 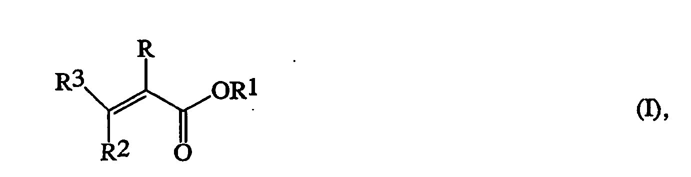 worin R Wasserstoff oder Methyl, R¹ einen linearen oder verzweigten Alkylrest mit 8 bis 40, vorzugsweise 10 bis 40, Kohlenstoffatomen, R² und R³ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt,
b) 0 bis 40 Gew.-% eines oder mehrerer (Meth)acrylate der Formel (III) 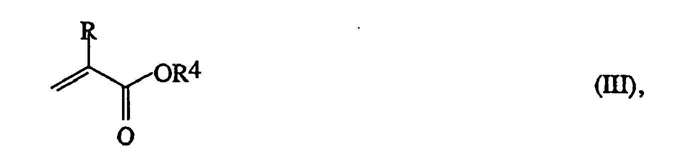 worin R Wasserstoff oder Methyl und R⁴ einen linearen oder verzweigten Alkylrest mit 1 bis 7 Kohlenstoffatomen bedeuten,
c) 0 bis 40 Gew.-% eines oder mehrerer (Meth)acrylate der Formel (IV) 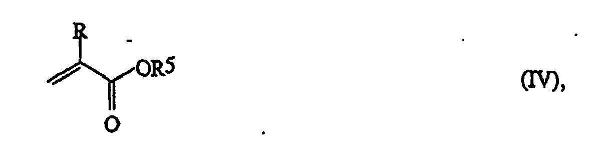 worin R Wasserstoff oder Methyl und R⁵ einen mit einer OH-Gruppe substituierten Alkylrest mit 2 bis 20 Kohlenstoffatomen oder einen alkoxylierten Rest der Formel (V) 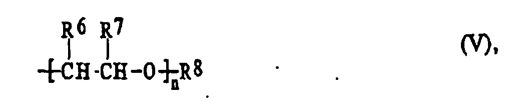 worin R⁶ und R⁷ unabhängig für Wasserstoff oder Methyl, R⁸ Wasserstoff oder einen Alkylrest mit 1 bis 40 Kohlenstoffatomen und n eine ganze Zahl von 1 bis 60 steht, bedeuten,
d) 0 bis 40 Gew.-% eines oder mehrerer (Meth)acrylate der Formel (VI) 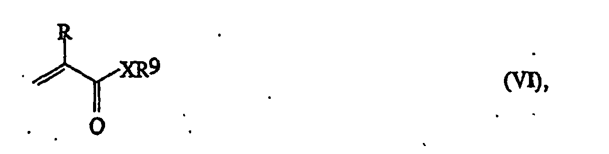 worin R Wasserstoff oder Methyl, X Sauerstoff oder eine Aminogruppe der Formel -NH- oder -NR¹⁰-, worin R¹⁰ für einen Alkylrest mit 1 bis 40 Kohlenstoffatomen steht, und R⁹ einen mit mindestens einer -NR¹¹R¹²-Gruppe substituierten linearen oder verzweigten Alkylrest mit 2 bis 20, vorzugsweise 2 bis 6 Kohlenstoffatomen bedeuten, wobei R¹¹ und R¹² unabhängig von einander für Wasserstoff, einen Alkylrest mit 1 bis 20, vorzugsweise 1 bis 6 Kohlenstoffatomen stehen oder worin R¹¹ und R¹² unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann, und
e) 0 bis 40 Gew.-% eines oder mehrerer Comonomere, wobei sich die Angabe Gew.-% jeweils auf das Gesamtgewicht der ethylenisch ungesättigten Monomere bezieht.

17. Verfahren nach Anspruch 16, **dadurch gekennzeichnet, daß** man als Comonomere Styrol, (Meth)acrylat-Derivate und/oder dispergierende Monomere einsetzt.

18. Verfahren gemäß einem oder mehreren der vorhergehenden Ansprüche,
**dadurch gekennzeichnet, daß** man metallisches Kupfer, Cu₂O, CuBr, CuCl, CuI, CuN₃, CuSCN, CuCN, CuNO₂, CuNO₃, CuBF₄, Cu(CH₃COO) oder. Cu(CF₃COO) als Katalysator einsetzt.

19. Verfahren gemäß einem oder mehreren der vorhergehenden Ansprüche, **dadurch gekennzeichnet, daß** man mindestens einen Chelatliganden einsetzt, der N-Atome enthält.

20. Verfahren gemäß einem oder mehreren der vorhergehenden Ansprüche, **dadurch gekennzeichnet, daß** man einen Initiator einsetzt, der Cl, Br, und/oder I als übertragbares Halogen aufweist.

21. Verfahren gemäß einem oder mehreren der vorhergehenden Ansprüche, **dadurch gekennzeichnet, daß man den Katalysator und die vom Polymer eliminierten** Halogenverbindung durch Fest-Flüssig-Trennung abtrennt.

22. Polymerzusammensetzungen mit reduziertem lebenden Halogengehalt erhältlich gemäß einem oder mehreren der Verfahren 1 bis 21, **dadurch gekennzeichnet, daß** der lebende Halogenanteil der Polymerzusammensetzungen ≤ 1000 ppm ist.

23. Polymerzusammensetzungen gemäß Anspruch 22, **dadurch gekennzeichnet, daß** der Halogenanteil der Polymerzusammensetzungen ≤ 100 ppm ist.

24. Verwendung einer Polymerzusammensetzung, die nach einem Verfahren gemäß einem oder mehreren Ansprüche der 1 bis 21 erhalten wurde, als Zusatz zu Schmierölen.

## Claims

1. Process for preparing polymer compositions having a reduced living halogen content, in which ethylenically unsaturated monomers are polymerized by means of initiators comprising a transferable halogen and one or more catalysts comprising at least one transition metal in the presence of ligands which can form a coordination compound with the metallic catalyst or catalysts and the living halogen atoms present in the polymer after the polymerization are at least partially eliminated, **characterized in that** the polymer composition is reacted with at least one organic nitrogen compound in the presence of a nonpolar solvent after the polymerization.

2. Process according to Claim 1, **characterized in that** the nonpolar solvent is used in an amount of from 5 to 95% by weight, based on the total weight.

3. Process according to Claim 1 or 2, **characterized in that** the nonpolar solvent used is a mineral oil and/or a synthetic oil.

4. Process according to Claim 3, **characterized in that** a mineral oil comprising from 0.5 to 30% by weight of aromatic components, from 15 to 40% by weight of naphthenic components, from 35 to 80% by weight of paraffinic components, up to 3% by weight of n-alkanes and from 0.05 to 5% by weight of polar compounds, in each case based on the total weight of the mineral oil, is used.

5. Process according to one or more of the preceding claims, **characterized in that** one or more heterocyclic, aromatic nitrogen compounds are used as organic nitrogen compound.

6. Process according to Claim 5, **characterized in that** a compound containing one or more pyridine groups is used as organic nitrogen compound.

7. Process according to one or more of the preceding claims, **characterized in that** one or more aliphatic nitrogen compounds are used as organic nitrogen compound.

8. Process according to Claim 7, **characterized in that** a compound containing one or more amine groups is used as organic nitrogen compound.

9. Process according to Claim 8, **characterized in that** an amine compound to whose nitrogen atom at least one methyl group is bound, for example hexamethyltriethylenetetramine, PMDETA or TMEDA, is used as organic nitrogen compound.

10. Process according to one or more of the preceding claims, **characterized in that** the organic nitrogen compound is used in an excess over the halogen-containing initiator used for the polymerization.

11. Process according to Claim 10, **characterized in that** the molar ratio of organic nitrogen compound to living halogen is in the range from 0.5 : 1 to 10 : 1.

12. Process according to one or more of the preceding claims, **characterized in that** the polymer composition is reacted at a temperature in the range from -20 to 200°C after the polymerization.

13. Process according to one or more of the preceding claims, **characterized in that** the polymer composition is reacted with the organic nitrogen compound for at least 1 hour after the polymerization.

14. Process according to one or more of the preceding claims, **characterized in that** ethylenically unsaturated monomers comprising from 50 to 100% by weight, based on the total weight of the ethylenically unsaturated monomers, are one or more ethylenically unsaturated ester compounds of the formula (I) 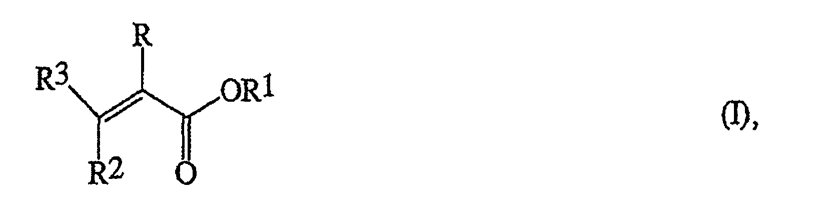 where R is hydrogen or methyl, R¹ is a linear or branched alkyl radical having from 8 to 40, preferably from 10 to 40, carbon atoms, R² and R³ are each, independently of one another, hydrogen or a group of the formula -COOR', where R' is hydrogen or a linear or branched alkyl radical having from 8 to 40, preferably from 10 to 40, carbon atoms, are polymerized.

15. Process according to one or more of the preceding claims, **characterized in that** a monomer composition comprising at least 50% by weight of one or more (meth)acrylates of the formula (II) 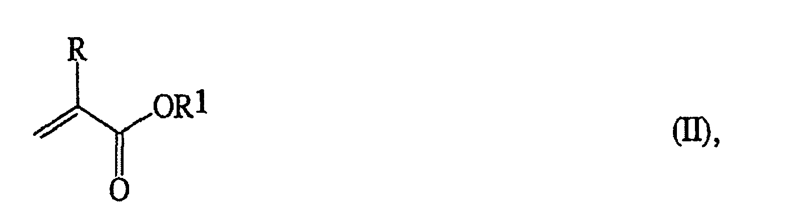 where
R is hydrogen or methyl and R¹ is a linear or branched alkyl radical having from 8 to 40, preferably from 10 to 40, carbon atoms, is polymerized.

16. Process according to one or more of the preceding claims, **characterized in that** a monomer composition comprising
a) from 60 to 100% by weight of one or more ethylenically unsaturated ester compounds of the formula (I) 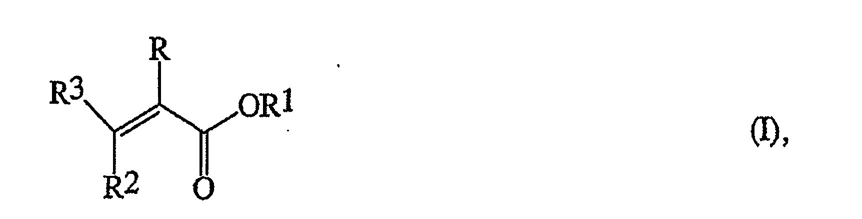 where R is hydrogen or methyl, R¹ is a linear or branched alkyl radical having from 8 to 40, preferably from 10 to 40, carbon atoms, R² and R³ are each, independently of one another, hydrogen or a group of the formula -COOR', where R' is hydrogen or a linear or branched alkyl radical having from 8 to 40, preferably from 10 to 40, carbon atoms,
b) from 0 to 40% by weight of one or more (meth)acrylates of the formula (III) 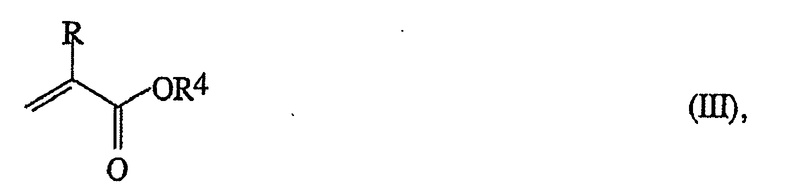 where R is hydrogen or methyl and R⁴ is a linear or branched alkyl radical having from 1 to 7 carbon atoms,
c) from 0 to 40% by weight of one or more (meth)acrylates of the formula (IV) 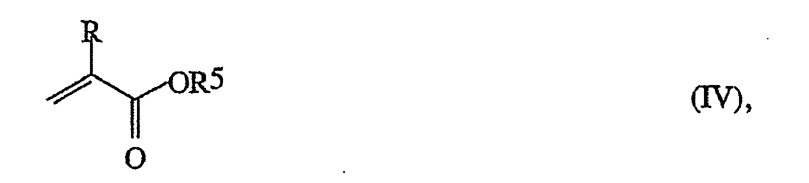 where R is hydrogen or methyl and R⁵ is an alkyl radical which is substituted by an OH group and has from 2 to 20 carbon atoms or is an alkoxylated radical of the formula (V) 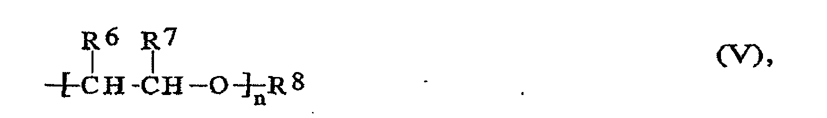 where R⁶ and R⁷ are each, independently of one another, hydrogen or methyl, R⁸ is hydrogen or an alkyl radical having from 1 to 40 carbon atoms and n is an integer from 1 to 60,
d) from 0 to 40% by weight of one or more (meth)acrylates of the formula (VI) 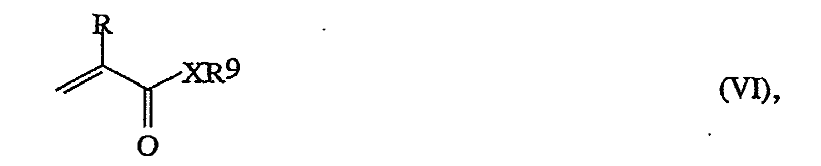 where R is hydrogen or methyl, X is oxygen or an amino group of the formula -NH- or -NR¹⁰-, where R¹⁰ is an alkyl radical having from 1 to 40 carbon atoms, and R⁹ is a linear or branched alkyl radical which is substituted by at least one -NR¹¹R¹² group and has from 2 to 20, preferably from 2 to 6, carbon atoms, where R¹¹ and R¹² are each, independently of one another, hydrogen or an alkyl radical having from 1 to 20, preferably from 1 to 6, carbon atoms or R¹¹ and R¹² together with the nitrogen atom and possibly a further nitrogen or oxygen atom form a 5- or 6-membered ring which may be substituted by C₁-C₆-alkyl, and
e) from 0 to 40% by weight of one or more comonomers, where the per cent by weight figure is in each case based on the total weight of the ethylenically unsaturated monomers
is polymerized.

17. Process according to Claim 16, **characterized in that** styrene, (meth)acrylate derivatives and/or dispersing monomers are used as comonomers.

18. Process according to one or more of the preceding claims, **characterized in that** metallic copper, Cu₂O, CuBr, CuCl, CuI, CuN₃, CuSCN, CuCN, CuNO₂, CuNO₃, CuBF₄, Cu(CH₃COO) or Cu(CF₃COO) is used as catalyst.

19. Process according to one or more of the preceding claims, **characterized in that** at least one chelating ligand containing N atoms is used.

20. Process according to one or more of the preceding claims, **characterized in that** an initiator having Cl, Br and/or I as transferable halogen is used.

21. Process according to one or more of the preceding claims, **characterized in that** the catalyst and the halogen compound eliminated from the polymer are separated off by solid/liquid separation.

22. Polymer composition having a reduced living halogen content obtainable by one or more of the processes 1 to 21, **characterized in that** the living halogen content of the polymer composition is ≤ 1000 ppm.

23. Polymer composition according to Claim 22,
**characterized in that** the halogen content of the polymer composition is < 100 ppm.

24. Use of a polymer composition obtained by a process according to one or more of Claims 1 to 21 as additive to lubricating oils.

## Revendications

1. Procédé de préparation de compositions polymères avec une teneur en halogène vivant réduite, dans lequel on polymérise des monomères éthyléniquement insaturés au moyen d'initiateurs, qui présentent un halogène pouvant être transféré, et d'un ou de plusieurs catalyseurs, qui comprennent au moins un métal de transition, en présence de ligands, qui peuvent former, avec le ou les catalyseurs métalliques, un composé de coordination et on élimine, après la polymérisation, au moins partiellement, les atomes d'halogène vivant contenus dans le polymère, **caractérisé en ce qu'**on transforme après la polymérisation la composition polymère en présence d'un solvant non polaire avec au moins un composé azoté organique.

2. Procédé selon la revendication 1, **caractérisé en ce qu'**on utilise le solvant non polaire en une quantité de 5 à 95% en poids par rapport au poids total.

3. Procédé selon la revendication 1 ou 2,
**caractérisé en ce qu'**on utilise comme solvant non polaire une huile minérale et/ou une huile synthétique.

4. Procédé selon la revendication 3, **caractérisé en ce qu'**on utilise une huile minérale qui contient 0,5 à 30% en poids de proportions aromatiques, 15 à 40% en poids de proportions naphthéniques, 35 à 80% en poids de proportions paraffiniques, jusqu'à 3% en poids de n-alcanes et 0,05 à 5% en poids de composés polaires, à chaque fois par rapport au poids total de l'huile minérale.

5. Procédé selon l'une ou plusieurs des revendications précédentes, **caractérisé en ce qu'**on utilise comme composé azoté organique un ou plusieurs composés azotés aromatiques, hétérocycliques.

6. Procédé selon la revendication 5, **caractérisé en ce qu'**on utilise comme composé azoté organique un composé qui contient un ou plusieurs groupes pyridine.

7. Procédé selon l'une ou plusieurs des revendications précédentes, **caractérisé en ce qu'**on utilise comme composé azoté organique un ou plusieurs composés azotés aliphatiques.

8. Procédé selon la revendication 7, **caractérisé en ce qu'**on utilise comme composé azoté organique un composé qui contient un ou plusieurs groupes amine.

9. Procédé selon la revendication 8, **caractérisé en ce qu'**on utilise comme composé azoté organique un composé amine, sur l'atome d'azote duquel est lié au moins un groupe méthyle, tel que l'hexaméthyltriéthylènetétramine, la PMDETA ou la TMEDA.

10. Procédé selon l'une ou plusieurs des revendications précédentes, **caractérisé en ce qu'**on utilise le composé azoté organique avec un excès par rapport à l'initiateur halogéné utilisé pour la polymérisation.

11. Procédé selon la revendication 10, **caractérisé en ce que** le rapport molaire de composé azoté organique à halogène vivant se situe dans la plage de 0,5:1 à 10:1.

12. Procédé selon l'une ou plusieurs des revendications précédentes, **caractérisé en ce qu'**on transforme, après la polymérisation, la composition polymère à une température dans la plage de -20 à 200°C.

13. Procédé selon l'une ou plusieurs des revendications précédentes, **caractérisé en ce qu'**on transforme, après la polymérisation, la composition polymère pendant au moins 1 heure avec le composé azoté organique.

14. Procédé selon l'une ou plusieurs des revendications précédentes, **caractérisé en ce qu'**on polymérise des monomères éthyléniquement insaturés, qui présentent 50 à 100% en poids, par rapport au poids total des monomères éthyléniquement insaturés, d'un ou de plusieurs composés de type ester éthyléniquement insaturés de formule (I) 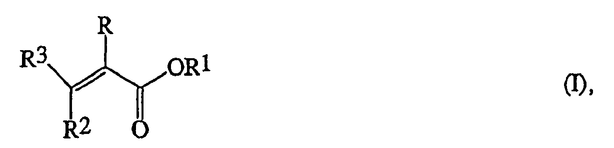 où R représente hydrogène ou méthyle, R¹ représente un radical alkyle linéaire ou ramifié comprenant 8 à 40, de préférence 10 à 40, atomes de carbone, R² et R³ représentent, indépendamment, hydrogène ou un groupe de formule -COOR', R' représentant hydrogène ou un radical alkyle linéaire ou ramifié comprenant 8 à 40, de préférence 10 à 40, atomes de carbone.

15. Procédé selon l'une ou plusieurs des revendications précédentes, **caractérisé en ce qu'**on polymérise une composition de monomères, présentant au moins 50% en poids d'un ou de plusieurs (méth)acrylates de formule (II) 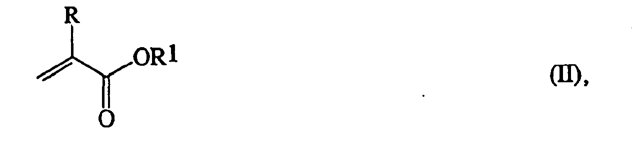 dans laquelle
R représente hydrogène ou méthyle et R¹ un radical alkyle linéaire ou ramifié comprenant 8 à 40, de préférence 10 à 40, atomes de carbone.

16. Procédé selon l'une ou plusieurs des revendications précédentes, **caractérisé en ce qu'**on polymérise une composition de monomères présentant
a) 60 à 100% en poids d' un ou de plusieurs composés de type ester éthyléniquement insaturés de formule (I) 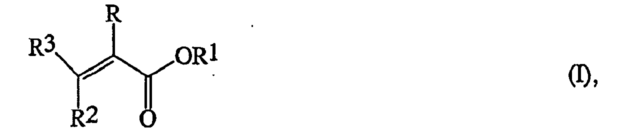 où R représente hydrogène ou méthyle, R¹ représente un radical alkyle linéaire ou ramifié comprenant 8 à 40, de préférence 10 à 40, atomes de carbone, R² et R³ représentent, indépendamment, hydrogène ou un groupe de formule -COOR', R' représentant hydrogène ou un radical alkyle linéaire ou ramifié comprenant 8 à 40, de préférence 10 à 40, atomes de carbone,
b) 0 à 40% en poids d'un ou de plusieurs (méth)acrylates de formule (III) 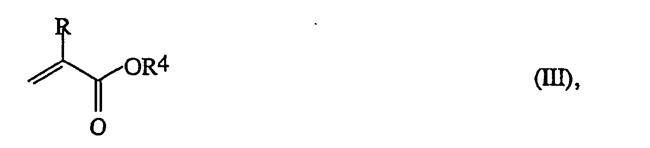 où R représente hydrogène ou méthyle et R⁴ un radical alkyle linéaire ou ramifié comprenant 1 à 7 atomes de carbone,
c) 0 à 40% en poids d'un ou de plusieurs (méth)acrylates de formule (IV) 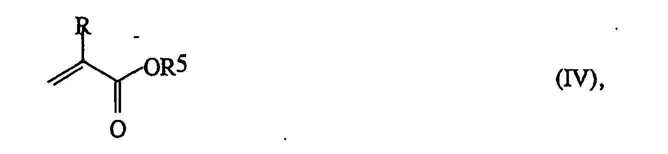 où R représente hydrogène ou méthyle et R⁵ un radical alkyle substitué par un groupe OH comprenant 2 à 20 atomes de carbone ou un radical alcoxylé de formule (V) 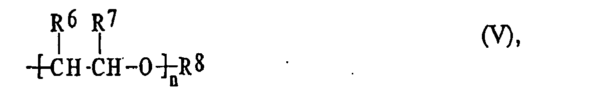 dans laquelle R⁶ et R⁷ représentent, indépendamment, hydrogène ou méthyle, R⁸ représente hydrogène ou un radical alkyle comprenant 1 à 40 atomes de carbone et n un nombre entier de 1 à 60,
d) 0 à 40% en poids d'un ou de plusieurs (méth)acrylates de formule (VI) 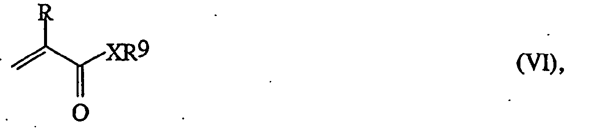 où R représente hydrogène ou méthyle, X représente oxygène ou un groupe amino de formule -NH- ou -NR¹⁰-, où R¹⁰ représente un radical alkyle comprenant 1 à 40 atomes de carbone, et R⁹ représente un radical alkyle, substitué par au moins un groupe -NR¹¹R¹²-, linéaire ou ramifié, comprenant 2 à 20, de préférence 2 à 6 atomes de carbone, R¹¹ et R¹² représentant, indépendamment l'un de l'autre, hydrogène, un radical alkyle comprenant 1 à 20, de préférence 1 à 6 atomes de carbone ou R¹¹ et R¹² formant, en intégrant l'atome d'azote et le cas échéant un autre atome d'azote ou un atome d'oxygène, un cycle de 5 ou 6 chaînons, qui peut le cas échéant être substitué par C₁-C₆-alkyle, et
e) 0 à 40% en poids d'un ou de plusieurs comonomères, l'indication % en poids se rapportant à chaque fois au poids total des monomères éthyléniquement insaturés.

17. Procédé selon la revendication 16, **caractérisé en ce qu'**on utilise comme comonomères du styrène, des dérivés de (méth)acrylate et/ou des monomères de dispersion.

18. Procédé selon l'une ou plusieurs des revendications précédentes, **caractérisé en ce qu'**on utilise comme catalyseur du cuivre métallique, Cu₂O, CuBr, CuCl, CuI, CuN₃, CuSCN, CuCN, CuNO₂, CuNO₃, CuBF₄, Cu(CH₃COO) ou Cu(CF₃COO).

19. Procédé selon l'une ou plusieurs des revendications précédentes, **caractérisé en ce qu'**on utilise au moins un ligand de chélate qui contient des atomes N.

20. Procédé selon l'une ou plusieurs des revendications précédentes, **caractérisé en ce qu'**on utilise un initiateur qui présente du Cl, du Br et/ou de l'I comme halogène transférable.

21. Procédé selon l'une ou plusieurs des revendications précédentes, **caractérisé en ce qu'**on sépare le catalyseur et le composé halogéno éliminé du polymère par une séparation solide-liquide.

22. Compositions polymères avec une teneur en halogène vivant réduite, pouvant être obtenues selon l'un ou plusieurs des procédés 1 à 21, **caractérisées en ce que** la proportion en halogène vivant des compositions polymères est ≤ 1 000 ppm.

23. Compositions polymères selon la revendication 22, **caractérisées en ce que** la proportion d'halogène des compositions polymères est ≤ 100 ppm.

24. Utilisation d'une composition polymère qui a été obtenue selon un procédé selon l'une ou plusieurs des revendications 1 à 21 comme additif pour des huiles lubrifiantes.
